# EUROPEAN PATENT SPECIFICATION

(11) **EP 2 583 840 B1**
(45) Date of publication and mention of the grant of the patent: **19.06.2019**
(21) Application number: 12188963.8
(22) Date of filing: 18.10.2012
(51) Int. Cl.: B60C 11/16, B60C 11/03

(54) **Pneumatic tire**
Luftreifen
Pneu

(30) Priority: 18.10.2011 JP 2011228781
(43) Date of publication of application: 24.04.2013
(73) Proprietor: THE YOKOHAMA RUBBER CO., LTD., Tokyo 105-8685 (JP)
(72) Inventor: Matsumoto, Kenichi, Hiratsuka City, Kanagawa 254-8601 (JP)
(74) Representative: Global IP Europe Patentanwaltskanzlei

(56) References cited:
- WO-A1-2009/147047
- WO-A1-2011/057834
- WO-A2-2008/024656
- JP-A- S5 996 005
- KR-A- 20100 090 034

## Description

### Technical Field

The present invention relates to a pneumatic tire provided with stud pins.

### Background Art

Conventionally, stud pins are embedded in a tire tread portion (hereinbelow, tread portion) on snow tires to provide grip on snow-covered road surfaces.

Generally, stud pins are embedded in holes for stud pin embedding provided in the tread portion. The hole diameter is expanded and the stud pin is tightly embedded in the hole so that the stud pin does not fall out of the hole due to driving or braking forces and lateral forces sustained from the road surface while the tire is rolling.

Under these conditions, among pneumatic studded tires that have, in the tread portion, a plurality of blocks having stud pins embedded therein and arranged so as to be divided by grooves extending in the width direction and circumferential direction of the tire, there is known a pneumatic studded tire according to JP2008-230259A in which the shedding of stud pins due to the tire sliding during cornering or when driving or braking is reduced, and in which the high performance of the studded tire can be maintained over a long period of time.

The particular pneumatic studded tire is one that has, in the tread portion, a plurality of blocks having stud pins embedded therein and arranged so as to be divided by grooves extending in the width direction and circumferential direction of the tire. Sipes are provided on the contact surface of the blocks and the marginal areas of the stud pins include regions with no sipes, and in the regions with no sipes, stud pin periphery slits are provided having a depth of 3 mm to 7.5 mm and extending in a linear and/or curved manner in a direction that crosses a linear direction radiating from the center of the stud pin.

WO 2011/057834 A1 discloses a tread profile of a pneumatic vehicle tire having a plurality of radially raised profile elements spaced apart from one another by means of scores or grooves, each being delimited in the radial direction R to the outside by an outer surface, forming the ground contact surface, wherein at least one spike is formed in at least one profile element, which is anchored by the spike body thereof in the rubber material of the profile element and designed having a spike point which extends out of the spike body in the radial direction R of the tire and ends in a radial position outside that of the outer surface of the profile element delimiting the profile element radially to the outside and forming the ground contact surface, wherein there is a recess formed in the outer surface delimiting the profile element radially to the outside and forming the ground contact surface for expelling ice which surrounds the spike in a substantially ring-shaped manner.

WO 2009/147047 A1 relates to studded tyres for driving on ice and deals with the problem of undesirable ice splinters which originate when a stud scrapes the ice. If the amount of ice splinters is too great a quantity of splinters build up in the area of contact between the tyre and the ice, resulting in the effect that the studs have less contact with the ice and therefore lose some of their effectiveness. The problem is solved by a tyre which comprises a tread and at least one stud having a longitudinal axis and at least one recess in the tread forming which is spaced from the stud in a certain distance.

WO 2008/024656 A2 discloses a tire manufacturing method and a tire. The tire comprises a tread pattern and one or more tractive devices. Separate voids are in a certain distance to the tractive devices which are not in direct contact to the tractive devices. Underneath the tractive devices are chambers and/or channels being controllable to urge movement of a corresponding tractive device.

KR 2010 0090034 A discloses an anti-skid device for tires which enables easier mounting than with snow chains, through a simplified coupling structure between a spike pin and a housing. This anti-skid device comprises a housing and a spike pin, wherein the housing includes a hollow column part, a first supporting plate and a second supporting plate. The column part is settled in a groove of a tread part. The first supporting plate surrounds the top opening of the column part. The second supporting plate closes the bottom opening of the column part. The spike pin includes a body part and pin parts projected from the top surface of the body part.

JP S59 96005 A discloses a pneumatic tire which comprises a tire tread portion T having a plurality of stud pin embedding holes in a tread outer surface of the pneumatic tire and a plurality of stud pins S embedded in the holes, wherein the tread outer surface of the pneumatic tire in which the holes are embedded is made of a tread rubber component and formed as a tread pattern, wherein each of the holes includes a fixing region and a slit region when viewing a contour of each of the holes from an outer side of the tread outer surface, wherein the fixing region abuts a circumference of each of the stud pins S for fixing the stud pins S, and wherein the slit region is spaced from the circumference of each of the stud pins and formed so as to extend from the fixing region such that a portion of the tire tread portion T is cut out.

### Summary of the Invention

### Problems to be Solved by the Invention

However, snow tires using stud pins are not driven only on snow-covered roads, and the shedding of stud pins is relatively frequent when the tires are driven on concrete or asphalt roads that have harder road surfaces than snow-covered roads.

Even with the abovementioned pneumatic studded tire, the shedding of stud pins (referred to as "pin shedding" below) often occurs due to forces sustained by the tire from the road surface when driving, braking or cornering on a concrete or asphalt road surface. As a result, further improvement to prevent pin shedding is required in the abovementioned pneumatic studded tire.

Accordingly, it is an object of the present invention to provide a pneumatic tire with improved performance on ice with less shedding of stud pins in comparison to conventional pneumatic tires provided with stud pins.

### Means for Solving the Problems

In one aspect of the present invention, a pneumatic tire includes a tire tread portion according to claim 1.

In a preferred aspect of the present invention, the pneumatic tire includes:
a tire tread portion having a plurality of stud pin embedding holes in a tread outer surface of the pneumatic tire; and
a plurality of stud pins embedded in the holes.

Each of the holes includes two fixing regions and two slit regions. The two fixing regions abut a circumference of each of the stud pins for fixing each of the stud pins. The two slit regions are spaced from the circumference of each of the stud pins. In other words, the two slit regions do not abut the circumference of each of the stud pins. The two slit regions are formed so as to extend from the fixing region so that a portion of the tire tread portion is cut out. When viewing the holes from the outer side of the tread outer surface, the two slit regions are provided in positions that face each other on opposing sides between the two fixing regions.

### Effect of the Invention

The above pneumatic tire demonstrates improved performance on ice with less shedding of the stud pins in comparison to conventional tires.

### Brief explanation of the drawings

FIG. 1 is a tire section showing a section of a pneumatic tire of the present embodiment.
FIG. 2 is a plan development of a portion of a tread pattern that is a planar development of the tread pattern of the pneumatic tire of the present embodiment.
FIG. 3 shows an embedding hole and a stud pin according to the present embodiment.
FIGS. 4A and 4B describe shapes of the hole shown in FIG. 2.
FIG. 5 shows a first alternative embodiment of a stud pin embedding hole provided in the pneumatic tire of the present embodiment.
FIG. 6 shows a second alternative embodiment of a stud pin embedding hole provided in the pneumatic tire of the present embodiment.

### Mode for carrying out the invention

### General explanation of tire

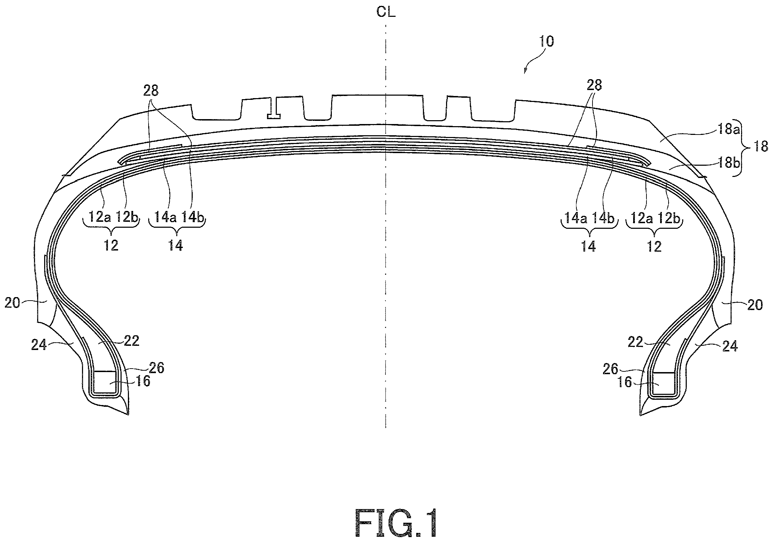

A pneumatic tire of the present embodiment will be described herein. FIG. 1 is a tire section showing a section of a pneumatic tire 10 (referred to as "tire" below) of the present embodiment. The tire 10 is a studded tire having stud pins embedded in the tread portion.

The tire 10 is, for example, a passenger car tire. The passenger car tire is a tire prescribed in Section A of the JATMA (Japan Automobile Tyre Manufacturers Association) Year Book 2010. Additionally, the tire 10 may also be applicable to a light truck tire as prescribed in Section B or a truck and bus tire as prescribed in Section C.

Dimensional values of the pattern elements specifically described hereinbelow are exemplary values for passenger car tires and the pneumatic tire of the present invention is not limited to these exemplary values.

The tire circumferential direction as explained below refers to a direction in which the tread outer surface rotates when the tire 10 is being rotated around the tire's rotational axis. The tire radial direction refers to a direction extending in a radial direction orthogonal to the tire's rotational axis. The outer side in the tire radial direction refers to a side that is removed from the tire's rotational axis in the tire radial direction. The tire width direction refers to a direction parallel to the direction of the tire's rotational axis, and the outer side in the tire width direction refers to both sides removed from a tire center line CL of the tire 10.

### Tire Construction

The tire 10 includes a carcass ply layer 12, a belt layer 14, and a bead core 16 as skeletal elements, and further includes a tread rubber component 18, a sidewall rubber component 20, a bead filler rubber component 22, a rim cushion rubber component 24, and an inner liner rubber component 26 provided around the skeletal elements.

The carcass ply layer 12 wraps around the pair of annular bead cores 16 to form a toroidal shape, and includes carcass ply members 12a, 12b that are organic fibers coated with rubber. In the tire 10 shown in Fig. 1, the carcass ply layer 12 is configured of the carcass ply members 12a, 12b, but may also be configured as one carcass ply member. The belt layer 14 configured by two belt members 14a, 14b is provided at the outer side in the tire radial direction of the carcass ply layer 12. The belt layer 14 is a component in which steel cords coated with rubber are arranged at a certain angle, for example slanting at 20 to 30 degrees with respect to the tire circumferential direction. The bottom layer belt component 14a is wider in the tire width direction than the top layer belt component 14b. The slanting directions of the steel cords of the two layers of the belt components 14a, 14b are arranged in directions that are opposite to each other. As a result, the belt components 14a, 14b are crossover layers and restrict expansion of the carcass ply layer 12 caused by air pressure when the tire is filled.

The tread rubber component 18 is provided at the outer side in the tire radial direction of the belt layer 14. Both ends of the tread rubber component 18 form sidewall portions connected to the sidewall rubber components 20. The tread rubber component 18 is configured of two layers of rubber components and includes a top layer tread rubber component 18a provided at the outer side in the tire radial direction, and a bottom layer tread rubber component 18b provided at the inner side in the tire radial direction. Rim cushion rubber components 24 are provided at the ends of the sidewall rubber components 20 on the inner side in the radial direction and abut against the rims when mounting the tire 10. The bead filler rubber component 22 is provided at the outer side in the tire radial direction of the bead core 16 so as to be sandwiched between the wrapped portions of the carcass ply layer 12 wrapped around the bead core 16 and a portion of the carcass ply layer 12 before the portion thereof that wraps around the bead core 16. The inner liner rubber component 26 is provided on the inner surface of the tire 10 facing a tire cavity region that is filled with air and encircled by the rim and the tire 10.

Furthermore, the tire 10 includes belt covers 28 that are made of organic fibers coated with rubber and that cover the belt layer 14 on the outer side in the tire radial direction of the belt layer 14.

The tire 10 includes the abovementioned tire construction, but the tire construction of the pneumatic tire according to the present invention is not limited to the tire construction shown in Fig. 1.

### Tread pattern

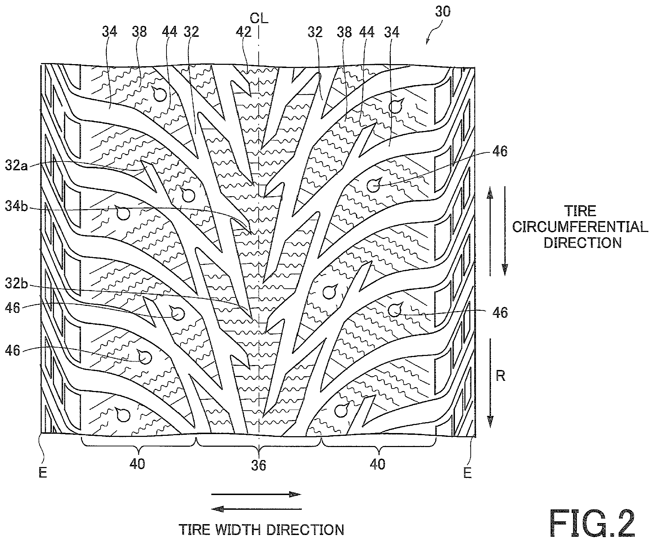

FIG. 2 is a plan development of a portion of a tread pattern that is a planar development of the tread pattern 30 of the pneumatic tire of the present embodiment. As illustrated in the tire 10 in FIG. 2, a rotating direction R that shows an orientation in one direction in the tire circumferential direction is specified. The orientation of the rotating direction R is displayed and specified by a number or letter and the like provided on the sidewall outer surface of the tire 10.

As shown in FIG. 2, the tread pattern 30 primarily includes slant grooves 32 and lateral grooves 34.

The slant grooves 32 are grooves that are slanted with respect to the tire circumferential direction so as to extend to the outer side in the tire width direction and advance (advancing in the upward direction in Fig. 2) to a side opposite the rotating direction R on both sides of the tire center line CL. The slant grooves 32 are closed midway so that they do not reach pattern ends E. A plurality of the slant grooves 32 are provided at certain intervals in the tire circumferential direction.

The lateral grooves 34 are grooves that are slanted with respect to the tire circumferential direction so as to extend toward the outer side in the tire width direction and advance toward sides opposite the rotating direction R on both sides of the tire center line CL, and furthermore extend to the pattern ends E on both sides. A plurality of the lateral grooves 34 are provided at certain intervals in the tire circumferential direction.

The slanting angle of the slant grooves 32 with respect to the tire circumferential direction is smaller than the slanting angle of the lateral grooves 34 with respect to the tire circumferential direction at the same positions in the tire width direction. As a result, the lateral grooves 34 intersect with the slant grooves 32.

The groove widths of the slant grooves 32 and the lateral grooves 34 are, for example, 5.0 to 15.0 mm, and the depths are 7 to 10 mm.

A center land portion 36 that continuously extends in the tire circumferential direction in a center region centered on the tire center line CL is formed by being defined by the slant grooves 32 and the lateral grooves 34 due to the slant grooves 32 and the lateral grooves 34 being arranged repeatedly at certain intervals in the circumferential direction. Moreover, outside land portions 40, which are configured of a plurality of blocks 38 having different shapes on the outer side in the tire width direction of the slant grooves 32, are formed by being defined by the slant grooves 32 and the lateral grooves 34. That is, land portions positioned at the outer side in the tire width direction of the center land portion 36 sandwiched between the slant grooves 32 represent the outside land portions 40.

A plurality of sipes 42, 44 that each extend in the tire width direction are provided in the center land portion 36 and the outside land portions 40. Although a large portion of each sipe 42, 44 has a zigzag shape when seen from the outer side of the tread outer surface, a portion may be linear. The sipe shapes of sipes 42, 44 when seen from the outer side of the tread outer surface are not limited to any particular shape. The sipes 42, 44 may have a three-dimensional structure that provides unevenness in the thickness direction of the sipes in portions that are inside of the tread outer surface in the tire radial direction.

A sipe according to the present embodiment may have a thickness of no more than 1.5 mm, and may be groove-shaped with a depth of 5.0 to 9.0 mm, and can be differentiated, in point of the dimensions, from grooves of the slant grooves 32 and the lateral grooves 34 and the like.

The slant grooves 32 extend in a slanting manner toward the outer side of the tire width direction and are slightly curved to form a convex shape facing toward the tire center line CL. The slant grooves 32 also intersect with at least two lateral grooves 34. Here, "intersect" refers to a state in which two grooves cross through each other. Specifically, the slant grooves 32 intersect with two lateral grooves 34 in Fig. 2. An end portion 32a on the outer side in the tire width direction of the slant groove 32 is positioned inside a region of the outside land portion 40, and an end portion 32b on the inner side in the tire width direction is positioned inside a region of the center land portion 36. The groove width of the slant groove 32 gradually increases from the end portion 32a on the outer side in the tire width direction toward the end portion 32b on the inner side.

The lateral groove 34 extends to the outer side in the tire width direction and is slightly curved to form a convex shape facing a direction on the opposite side of the rotating direction R. The lateral groove 34 extends to the pattern end E, and an end portion 34b on the inner side in the tire width direction is positioned inside the center land portion 36 or inside a region of the slant groove 32. Here, the end portion 34b on the inner side in the tire width direction of the lateral groove 34 being positioned inside the region of the slant groove 32 means that the lateral groove 34 communicates with the slant groove 32 but does not cross through the slant groove 32. Specifically, the lateral groove 34 having the end portion 34b positioned inside a region of the center land portion 36 and the lateral groove 34 having the end portion 34b positioned inside the slant groove 32 are arranged alternately in the tire circumferential direction. In FIG. 2, although the lateral groove 34 having the end portion 34b positioned inside the region of the center land portion 36 and the lateral groove 34 having the end portion 34b positioned inside the slant groove 32 are arranged one after another in the tire circumferential direction, two lateral grooves 34 having the end portions 34b positioned inside the region of the center land portion 36 and one lateral groove 34 having the end portion 34b positioned inside the slant groove 32 may be arranged alternately in the tire circumferential direction, or one lateral groove 34 having the end portion 34b positioned inside the region of the center land portion 36 and two lateral grooves 34 having the end portions 34b positioned inside slant grooves 32 may be arranged alternately in the tire circumferential direction.

In this way, the tread pattern 30 includes the rib-shaped center land portion 36, which includes the plurality of sipes 42 and extends continuously in the tire circumferential direction, arranged in the center region of the tread portion centered on the tire center line CL. Therefore, in the center land portion 36, unlike blocks arranged so as to be divided in the tire circumferential direction by grooves, blocks of tread rubber components of the center land portion 36 separated by the sipes 42 do not easily overturn due to lateral forces or driving or braking forces sustained from the road surface. As a result, an adhesive frictive force between the road surface and the tire 10 is increased so that performance on ice is improved.

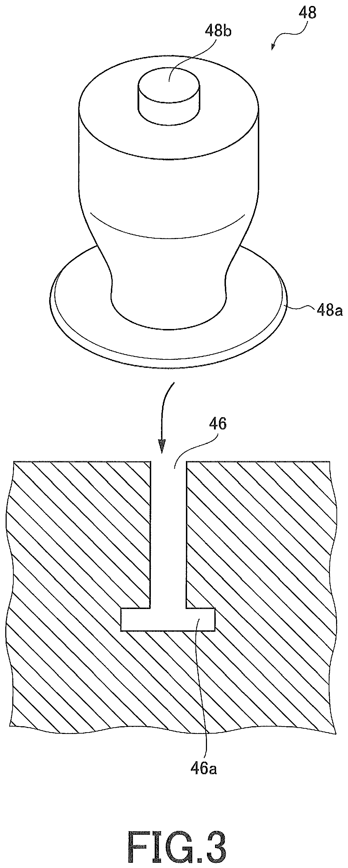

This type of tread pattern 30 is provided with a plurality of stud pin embedding holes 46 in the outer surface of the tread in the outside land portions 40 positioned to the outer side in the tire width direction of the slant grooves 32. A stud pin 48 (see Fig. 3) is embedded in each hole 46. The stud pins 48 are not depicted in Fig. 2 and the holes 46 are depicted with the size of the holes expanded to allow for the embedding of the stud pins 48. Fig. 3 shows the stud pin 48 and the hole 46.

The embedding hole 46 for the stud pin 48 may be provided by being formed as a portion of the tread pattern during tire curing in the tire manufacturing process by previously forming a convex portion that corresponds to the hole 46 in a tire die, or the hole 46 may be provided by using a drill after the tire is cured. The diameter of the hole 46 is smaller than the diameter of the stud pin 48, and the stud pin 48 is embedded in the hole 46 by pressing the stud pin 48 into the hole 46 using a special device which is not shown.

According to the abovementioned tread pattern 30, the holes 46 can be distributed in the tire width direction in the outside land portions 40 since the outside land portions 40 are formed by being defined by the slant grooves 32 and the lateral grooves 34 provided on both sides of the tire center line CL. However, the pattern shape of the tread pattern 30 shown in Fig. 2 and the positions of the stud pin 48 embedding holes 46 shown in Fig. 2 are examples, and the shape of the tread pattern 30 and the positions of the holes 46 are not limited in particular.

The positions of the stud pin 48 embedding holes 46 provided in the tread portion are preferably set for at least seven locations, or more preferably seven to ten locations, as positions in the tire width direction and in regions of the outside land portions 40. In this case, the holes 46 are preferably arranged in a distributed manner in set positions in the tire width direction. As a result, since the stud pins 48 embedded in the holes 46 distributed in the tire width direction scrape the snow surface or ice surface during tire rotation, driving or braking forces are stabilized and improved on ice.

The stud pin 48 as shown in Fig. 3 is embedded into the expanded hole 46 so that a disc-like base portion 48a fits in a bottom portion 46a of the hole 46. The height of the stud pin 48 and the depth of the hole 46 are set so that an end portion 48b of the stud pin 48 protrudes 0.7 to 1.2 mm from the outer surface of the tread portion when the stud pin 48 is embedded into the hole 46.

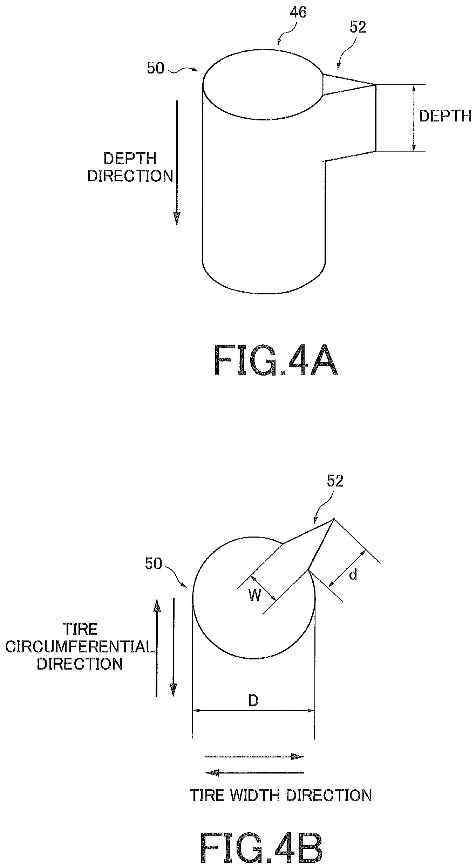

Figs. 4A and 4B describe shapes of the hole 46 (the bottom portion 46a is not shown) shown in Fig. 2.

As illustrated in Fig. 4B, when looking at the contour of the hole 46 from the outer side of the tread outer surface, each hole 46 includes a fixing region 50 that abuts the outer circumference of each of the embedded stud pins 48 for fixing the stud pins 48, and a slit region 52 that is formed so that the hole 46 extends from the fixing region 50 in a slit shape and cuts out a portion of the tire tread portion.

The fixing region 50 has a tubular shape corresponding to the body of rotation of the stud pin 48, and has a circular arc shape when looking at the contour of the hole 46 from the outer side of the tread outer surface.

The slit region 52, more specifically, has a shape that protrudes outwardly from a portion of the circular arc shape of the fixing region 50 when looking at the contour of the hole 46 from the outer side of the tread outer surface. The reason that the fixing region 50 and the slit region 52 are provided in the hole 46 in this way is described below. Specifically, the stud pin 48 moves slightly when the stud pin 48 sustains a driving or braking force or a lateral force from the road surface. At this time, a portion of the block (this portion of the block is also referred to hereinbelow as the rubber block around the stud pin) of the rubber material surrounding the stud pin 48 and segmented by the lateral grooves 34 and the sipes 44 provided in the outside land portions 40 is also able to move following the movement of the stud pin 48 because the slit region 52 is provided in the hole 46. As a result, the integrity of the rubber block around the stud pin and the stud pin 48 is established, and the shedding of the stud pins 48 is reduced and performance on ice can be improved in comparison to conventional tires. When the stud pins 48 are conventionally fixed and embedded so that the stud pin 48 is completely encircled by the hole 46, although the stud pin tries to move due to the forces sustained from the road surface, the rubber block around the stud pin cannot follow the movement of the stud pin, and thus the stud pin falls out easily.

In the present embodiment, the shape of the slit region 52 as seen from the outer side of the tread outer surface is a shape in which two straight lines protruding from the circular arc shape of the fixing region 50 connect at the protruding leading ends, that is, a triangular shape. However, the shape of the slit region 52 is not limited to a triangular shape and may be a rectangular shape. However, an orientation for easy movement of the rubber block around the stud pin can be locally defined by making the shape of the slit region 52 the triangular shape as seen from the outer side of the tread outer surface as described above. The rubber block moves easily in a direction that is orthogonal to the direction in which the slit region 52 extends. Specifically, the stiffness of the rubber block around the stud pin can be locally weakened along the direction of the braking force since the stud pin 48 falls out easily due to a large braking force sustained from the road surface. That is, the rubber block around the stud pin can easily move in line with the direction of the movement of the stud pin that tries to move due to the braking force sustained from the road surface. As a result, the shedding of the stud pin 48 can be further reduced.

Since the stud pin 48 sheds easily during driving or braking, the slit region 52 that extends from the fixing region 50 preferably has a direction component that extends at least in the tire width direction to allow the rubber block around the stud pin to move in the same orientation in line with the orientation of the movement of the stud pin 48. That is, the slit region 52 extends in a direction that slants in the tire circumferential direction. By allowing the rubber block around the stud pin to move easily following the movement of the stud pin 48 when the tire 10 is braking, the angle of the direction of extension of the slit region 52 with respect to the tire width direction is preferably 0 to 45 degrees considering the features of reducing the shedding of the stud pin 48 and improving the braking performance on ice-covered road surfaces.

Furthermore, providing the slit region 52 in the outer surface portion including the tread outer surface in the depth direction of the hole 46 as shown in Fig. 4A is desirable considering the feature that the rubber block around the stud pin moves easily without shedding of the stud pin 48. The provision of the slit region 52 in the outer surface portion refers to the slit region 52 being provided continuously from the tread outer surface toward the inner side and excludes the slit region 52 not being provided in the tread outer surface, where the slit region 52 is provided from a tread inner portion deeper toward the inner side. In this case, the depth (see Fig. 4(a)) of the slit region 52 extending in the depth direction of the hole 46 is preferably 0.5 to 2.0 mm considering the features of reducing the shedding of the stud pins 48 and improving the braking performance on ice-covered road surfaces. The depth of the slit region 52 is more preferably 1.0 to 1.5 mm. Fabricating the slit region 52 is rendered difficult in the production process if the depth is less than 0.5 mm, and the stiffness of the rubber block around the stud pin is excessively reduced and the braking performance on ice is reduced if the depth of the slit region 52 exceeds 2.0 mm.

Moreover, as shown in Fig, 4B, a ratio of d/D, where the diameter of the circular arc shape of the fixing region 50 is defined as D and the protrusion length of the slit region 52 protruding in the triangular shape is defined as d, is preferably 0.05 to 0.4 considering the features of reducing the shedding of the stud pins 48 and improving the braking performance on ice-covered road surfaces. The protrusion length d of the slit region 52 is preferably 0.5 to 2.0 mm, or more preferably 1.0 to 1.5 mm. Fabricating the slit region 52 is rendered difficult in the production process if the protrusion length d is less than 0.5 mm, and the stiffness of the rubber block around the stud pin is excessively reduced and the braking performance on ice is reduced if the protrusion length d exceeds 2.0 mm.

Moreover, as shown in Fig, 4B, a ratio W/D, where the width at a protrusion base portion where the slit region 52 protrudes from a portion of the circular arc shape of the fixing region 50 outwardly to the outside of the circular arc shape is defined as W, is preferably 0.05 to 0.40 considering the features of reducing the shedding of the stud pins 48 and improving the braking performance on ice-covered road surfaces. The width W is, for example, 0.3 to 1.5 mm, and preferably 0.5 to 1.0 mm. Fabricating the slit region 52 is rendered difficult in the production process if the width W is less than 0.3 mm, and the stiffness of the rubber block around the stud pin is excessively reduced and the braking performance on ice is reduced if the width W exceeds 1.5 mm.

### Alternative Embodiment 1

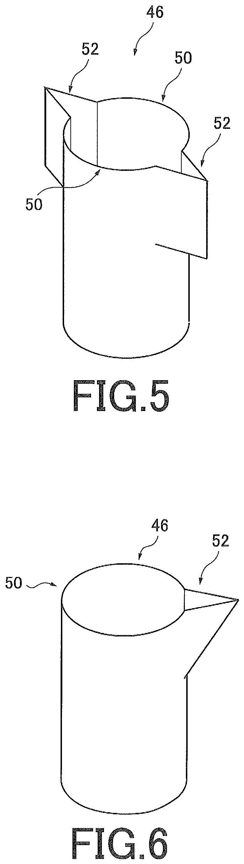

Fig. 5 shows a first alternative embodiment of the shape (the bottom portion 46a is not shown) of the hole 46 of the tire 10. The hole 46 of the first alternative embodiment includes two fixing regions 50 that abut the outer circumference of the stud pin for fixing the stud pin 48, and two slit regions 52 that do not abut the outer circumference of the stud pin 48 and are formed extending from the fixing regions 50 so as to cut out a portion of the tread portion.

The two slit regions 52 are provided at positions facing each other on opposing sides between the two fixing regions 50 as seen from the outer side of the tread outer surface. In this case, when the tread portion sustains a driving or braking force or a lateral force from the road surface, the rubber block around the stud pin follows the movement of the stud pin 48 and moves more easily in the direction orthogonal to the direction in which the slit regions 52 extend due to the slit regions 52 on both sides. As a result, the shedding of the stud pin 48 can be reduced.

The following aspects are preferred in the present alternative embodiment:
- The slit regions 52 that extend from the fixing regions 50 have direction components that extend at least in the tire width direction.
- The extension direction of the slit regions 52 is slanted 0 to 45 degrees with respect to the tire width direction.
- The slit regions 52 are provided in the outer surface portion including the tread outer surface in the depth direction of the hole 46.
- The depth of the slit regions 52 extending in the depth direction of the hole 46 is preferably 0.5 to 2.0 mm.
- The fixing regions 50 have a circular arc shape when looking at the contour of the hole 46 from the outer side of the tread outer surface, and the slit regions 52 have a shape that protrudes outwardly to the outside of the circular arc shape from a portion of the circular arc shape.
- The contour of the slit regions 52 as seen from the outer side of the tread outer surface has a shape in which two straight lines protruding from the circular arc shape are connected at the protruding leading ends so as to protrude in a triangular shape from a portion of the circular arc shape to the outer side of the circular arc shape.
- The ratio d/D, where the diameter of the abovementioned circular arc shape is defined as D and the protrusion length of the abovementioned protruding triangular shape of the slit regions 52 is defined as d, is 0.05 to 0.40.
- The ratio W/D, where the width at a protrusion base portion where the slit regions 52 protrude from portion of the circular arc shape of the fixing regions 50 to the outer side of the circular arc shape is defined as W, is 0.05 to 0.40.

### Alternative Embodiment 2

Fig. 6 shows a second alternative embodiment of the shape of the hole 46 of the tire 10. Although the hole 46 of the second alternative embodiment has the same contour shape as the contour shape of the hole 46 shown in Fig. 4B as seen from the outer side of the tread outer surface, as shown in Fig. 6, the protrusion length of the slit region 52 decreases as positions in the depth direction of the hole 46 become deeper. In this case, when the tread portion sustains a driving or braking force or a lateral force from the road surface, the rubber block around the stud pin follows the movement of the stud pin 48 and moves more easily in the direction orthogonal to the direction in which the slit regions 52 extend, and consequently shedding of the stud pins 48 is reduced.

The following aspects are preferred in the present alternative embodiment:
- The slit region 52 that extends from the fixing region 50 has a direction component that extends at least in the tire width direction.
- The extension direction of the slit region 52 is slanted 0 to 45 degrees with respect to the tire width direction.
- The slit region 52 is provided in the outer surface portion including the tread outer surface in the depth direction of the hole 46.
- The depth of the slit region 52 extending in the depth direction of the hole 46 is preferably 0.5 to 2.0 mm.
- The fixing region 50 has a circular arc shape when looking at the contour of the hole 46 from the outer side of the tread outer surface, and the slit region 52 has a shape that protrudes to the outer side of the circular arc shape from a portion of the circular arc shape.
- The contour of the slit region 52 as seen from the outer side of the tread outer surface has a shape in which two straight lines protruding from the circular arc shape are connected at the protruding leading ends so as to protrude in a triangular shape from a portion of the circular arc shape to the outer side of the circular arc shape.
- The ratio d/D, where the diameter of the abovementioned circular arc shape is defined as D and the protrusion length of the abovementioned protruding triangular shape of the slit regions 52 is defined as d, is 0.05 to 0.40.
- The ratio W/D, where the width at a protrusion base portion where the slit region 52 protrudes from portion of the circular arc shape of the fixing region 50 to the outer side of the circular arc shape is defined as W, is 0.05 to 0.40.

### Examples

In order to study the effects of the tire 10 according to the present embodiment, shedding (pin release resistance) of the stud pins 48 and braking performance of the tire 10 was studied using the tire 10 provided with various sizes of holes 46 in the tread portion. During the evaluations, tires 10 were mounted on a 2000 cc class passenger car (front-wheel drive car) and the passenger car was driven to conduct the tire evaluations.

The tires 10 used in the evaluations have the tire construction shown in Fig. 1 and the tread pattern 30 shown in Fig. 2. Four tires were respectively fabricated for conventional tires and for the tires of examples 1 to 20 having different shapes of the holes 46. The tire size of the fabricated tires 10 is 205/55R16. The tires 10 were mounted on rims prescribed in the JATMA Year Book 2010, and the tires 10 were filled with air using an air pressure corresponding to the maximum load performance prescribed in the table of air pressure versus load performance in the JATMA Year Book 2010. The applied load of the tires 10 was set at a load corresponding to two passengers.

The number of stud pins 48 shed from the tread portion were counted after being driven on 10,000 km of dry road surfaces including asphalt and concrete road surfaces since the shedding of stud pins rarely occurs when driving on ice-covered road surfaces. The evaluations are expressed using reciprocals of the number of stud pins shed based on indexes of 100 as the value of the conventional example described below. A larger index value indicates that the number of stud pins 48 shed is low and thus represents a high pin release resistance.

An average value for the braking performance was derived by measuring the braking distance a plurality of times when full brakes were applied to the passenger car traveling at a speed of 40 km/h. The evaluations are expressed based on indexes of 100 as the average of the above measured value of the conventional example described below. A larger index value indicates a higher braking performance.

### Conventional Example, Examples 1 to 5

The conventional example is an example in which the holes for the stud pins 48 only include the fixing region 50 and thus the slit region 52 is not provided. As shown in Table 1, the examples 1 to 5 are examples in which the depth, the length d / diameter D, and the width W / diameter D are fixed, and the directions in which the slit regions 52 extend are different. "Number" in the slit region in Table 1 is the number of slit regions 52 provided. The number for the example shown in Fig, 4A is 1, and the number for the example shown in Fig. 5 is 2. The depth of all the holes 46 in the following examples 1 to 20 is 9 mm, and the length of all the stud pins 48 in the same examples is 10 mm. The specifications and the evaluation results are shown in the following Table 1.

**Table 1**

| | | Conventional example | Example 1 | Example 2 | Example 3 | Example 4 | Example 5 |
|---|---|---|---|---|---|---|---|
| Slit Region | Number | None | 1 | 1 | 1 | 1 | 1 |
| | Angle with respect to tire width direction (degree) | No | 20 | 0 | 45 | 60 | 90 |
| | Depth (mm) | No | 1.0 | 1.0 | 1.0 | 1.0 | 1.0 |
| | Length d (mm)/ Diameter D (mm) | No | 0.167 | 0.167 | 0.167 | 0.167 | 0.167 |
| | Width W (mm)/ Diameter D (mm) | No | 0.167 | 0.167 | 0.167 | 0.167 | 0.167 |
| Evaluation Results | Pin release resistance | 100 | 120 | 120 | 110 | 105 | 103 |
| | Braking performance | 100 | 112 | 115 | 108 | 105 | 103 |

As can be seen from the evaluation results of Table 1, the configuration in which the slit region 52 extending from the fixing region 50 has a direction component extending at least in the tire width direction, or in other words, the configuration in which the slit region 52 extending direction does not match the tire circumferential direction is preferable considering the features that the pin release resistance and the braking performance are improved, and more preferable when the angle of extension of the slit region 52 is at an angle 0 to 45 degrees with respect to the tire width direction.

### Examples 1, 6 to 9

The examples 6 to 9 are examples in which the depth of the slit region 52 depth is changed in a range of 0.3 to 2.2 mm in the holes 46 used in the examples 1. The specifications and the evaluation results are shown in the following Table 2.

**Table 2**

| | | Example 1 | Example 6 | Example 7 | Example 8 | Example 9 |
|---|---|---|---|---|---|---|
| Slit Region | Number | 1 | 1 | 1 | 1 | 1 |
| | Angle with respect to tire width direction (degree) | 20 | 20 | 20 | 20 | 20 |
| | Depth (mm) | 1.0 | 0.3 | 0.5 | 2.0 | 2.2 |
| | Length d (mm)/Diameter D (mm) | 0.167 | 0.167 | 0.167 | 0.167 | 0.167 |
| | Width W (mm)/Diameter D (mm) | 0.167 | 0.167 | 0.167 | 0.167 | 0.167 |
| Evaluation Results | Pin release resistance | 120 | 105 | 110 | 115 | 103 |
| | Braking performance | 112 | 103 | 110 | 105 | 105 |

As can be seen from the evaluation results in Table 2, the depth of the slit region 52 is preferably 0.5 to 2.0 mm considering the features that the pin release resistance and the braking performance are further improved.

### Examples 1, 10 to 13

The examples 10 to 13 are examples in which the length d / diameter D in the slit region 52is changed in a range of 0.04 to 0.42 in the holes 46 used in the example 1. The specifications and the evaluation results are shown in the following Table 3.

**Table 3**

| | | Example 1 | Example 10 | Example 11 | Example 12 | Example 13 |
|---|---|---|---|---|---|---|
| Slit Region | Number | 1 | 1 | 1 | 1 | 1 |
| | Angle with respect to tire width direction (degree) | 20 | 20 | 20 | 20 | 20 |
| | Depth (mm) | 1.0 | 1.0 | 1.0 | 1.0 | 1.0 |
| | Length d (mm)/Diameter D (mm) | 0.167 | 0.04 | 0.05 | 0.40 | 0.42 |
| | Width W (mm)/Diameter D (mm) | 0.167 | 0.167 | 0.167 | 0.167 | 0.167 |
| Evaluation Results | Pin release resistance | 120 | 105 | 110 | 115 | 103 |
| | Braking performance | 112 | 103 | 105 | 110 | 105 |

As can be seen from the evaluation results in Table 3, the length d / diameter D of the slit region 52 is preferably 0.05 to 0.40 considering the features that the pin release resistance and the braking performance are further improved.

### Examples 1, 14 to 17

The examples 14 to 17 are examples in which the width W / diameter D in the slit region 52 is changed in a range of 0.04 to 0.42 in the holes 46 used in the example 1. The specifications and the evaluation results are shown in the following Table 4.

**Table 4**

| | | Example 1 | Example 14 | Example 15 | Example 16 | Example 17 |
|---|---|---|---|---|---|---|
| Slit Region | Number | 1 | 1 | 1 | 1 | 1 |
| | Angle with respect to tire width direction (degree) | 20.0 | 20.0 | 20.0 | 20.0 | 20.0 |
| | Depth (mm) | 1.0 | 1.0 | 1.0 | 1.0 | 1.0 |
| | Length d (mm)/Diameter D (mm) | 0.167 | 0.167 | 0.167 | 0.167 | 0.167 |
| | Width W (mm)/Diameter D (mm) | 0.167 | 0.04 | 0.05 | 0.40 | 0.42 |
| Evaluation Results | Pin release resistance | 120 | 105 | 115 | 110 | 103 |
| | Braking performance | 112 | 103 | 105 | 110 | 105 |

As can be seen from the evaluation results in Table 4, the width W / diameter D of the slit region 52 is preferably 0.05 to 0.40 considering the features that the pin release resistance and the braking performance are further improved.

### Examples 18 to 20

In the examples 18 to 20, the number of slit regions 52 differs from that of the hole 46 used in the example 1. The examples 18 and 19 have two slit regions 52. The examples 18 and 19 include the hole 46 with the shape shown in Fig. 5.

The depth of the slit regions 52 in the example 18 is 0.5 mm, and the angles of the extension direction of the slit regions 52 with respect to the tire width direction were 20 and 200 degrees. When considering the width W of the protrusion base portions of the slit regions 52, the slit regions 52 were positioned in ranges of 0 to 40 degrees and 180 to 220 degrees with respect to the tire width direction. The two slit regions 52 were provided in positions that face each other on either side of the two fixing regions 50. The example 19 had a specification the same as that of the example 18 except that the depth of the slit regions 52 was 1.0 mm. The number of the slit regions 52 in the example 20 was three, and the angles of the extension direction of the slit regions 52 with respect to the tire width direction were equally divided around 360 degrees at 30, 150, and 270 degrees. When considering the width W of the protrusion base portions of the slit regions 52, the slit regions 52 were positioned in ranges of 10 to 50 degrees, 130 to 170 degrees, and 250 to 290 degrees with respect to the tire width direction. The specifications and the evaluation results are shown in the following Table 5.

**Table 5**

| | | Example 18 | Example 19 | Example 20 |
|---|---|---|---|---|
| Slit Region | Number | 2 | 2 | 3 |
| | Angle with respect to tire width direction (degree) | 20.0 200.0 | 20.0 200.0 | 30.0, 150.0, 270.0 |
| | Depth (mm) | 0.5 | 1.0 | 1.0 |
| | Length d (mm)/Diameter D (mm) | 0.167 | 0.167 | 0.167 |
| | Width W (mm)/Diameter D (mm) | 0.167 | 0.167 | 0.167 |
| Evaluation Results | Pin release resistance | 115 | 125 | 110 |
| | Braking performance | 112 | 115 | 105 |

The example 19 differs from the example 1 only by the number of the slit regions 52. As can be seen when comparing the example 19 and the example 1 in Table 1, the example 19 showed an improvement in pin release resistance and braking performance compared to the example 1. When three slit regions 52 are provided as in the embodiment 20, transformation of the block around the stud pin 48 in the tread portion increases and braking performance decreases. As can be seen from the embodiments 18 to 20, providing two slit regions 52 in positions facing each other on either side of the two fixing regions 50 can be understood to be preferable considering the features that the pin release resistance and the braking performance are improved.

According to the above evaluation results, the advantageous effect of the present embodiment and the alternative embodiments thereof can be seen. Reference numerals

10 Pneumatic tire
12 Carcass ply layer
12a, 12b Carcass ply material
14 Belt layer
14a, 14b Belt material
16 Bead core
18 Tread rubber component
18a Top layer tread rubber component
18b Bottom layer tread rubber component
20 Sidewall rubber component
22 Bead filler rubber component
24 Rim cushion rubber component
26 Inner liner rubber component
28 Belt cover layer
30 Tread pattern
32 Slant groove
34 Lateral groove
36 Center land portion
38 Block
40 Outside land portion
42, 44 Sipe
46 Hole
46a Bottom portion
48 Stud pin
48a Base portion
48b End portion
50 Fixing region
52 Slit region

## Claims

1. A pneumatic tire (10), comprising:
a tire tread portion having a plurality of stud pin (48) embedding holes (46) in a tread outer surface of the pneumatic tire (10); and
a plurality of stud pins (48) embedded in the holes (46);
wherein the tread outer surface of the pneumatic tire (10) in which the holes (46) are embedded is made of a tread rubber component (18) and formed as a tread pattern (30),
wherein each of the holes (46) includes a fixing region (50) and a slit region (52) when viewing a contour of each of the holes (46) from an outer side of the tread outer surface,
wherein the fixing region (50) abuts a circumference of each of the stud pins (48) for fixing the stud pins (48),
wherein the slit region (52) is spaced from the circumference of each of the stud pins (48) and formed so as to extend from the fixing region (50) such that a portion of the tire tread portion is cut out,
**characterised in that**
a contour of the slit region (52), when seen from the outer side of the tread outer surface, has a shape in which two straight lines protruding from a circular arc shape of the fixing region (50) are connected at protruding leading ends such that the contour of the slit region (52) protrudes outwardly in a triangular shape from a portion of the circular arc shape to an outside of the circular arc shape.

2. The pneumatic tire (10) according to claim 1, wherein each of the holes (46) includes two fixing regions (50) and two slit regions (52), when viewing the contour of each of the holes (46) from the outer side of the tread outer surface,
wherein the two fixing regions (50) abut a circumference of each of the stud pins (48) for fixing the stud pins (48),
wherein the two slit regions (52) are spaced from the circumference of each of the stud pins (48) and formed so as to extend from the fixing region (50) such that a portion of the tire tread portion is cut out, and
wherein, when viewing the holes (46) from the outer side of the tread outer surface, the two slit regions (52) are provided at positions that face each other on opposing sides between the two fixing regions (50).

3. The pneumatic tire (10) according to any one of claims 1 to 2, wherein
the slit region (52) extending from the fixing region (50) has a direction component that extends at least in the tire width direction.

4. The pneumatic tire (10) according to any one of claims 1 to 3, wherein
an extension direction of the slit region (52) is slanted 0 to 45 degrees with respect to the tire width direction.

5. The pneumatic tire (10) according to any one of claims 1 to 4, wherein
the slit region (52) is provided in an outer surface portion that includes the tread outer surface in a depth direction of the hole (46).

6. The pneumatic tire (10) according to any one of claims 1 to 5, wherein
a depth of the slit region (52) in which the slit region (52) extends in the depth direction of the hole is 0.5 to 2.0 mm.

7. The pneumatic tire (10) according to any one of claims 1 to 6, wherein
when viewing the contour of each of the holes (46) from the outer side of the tread outer surface, the slit regions (52) have a shape that protrudes outwardly from a portion of the circular arc shape to the outside of the circular arc shape.

8. The pneumatic tire (10) according to any one of claims 1 to 7, wherein
a ratio d/D is 0.05 to 0.40, where a diameter of the circular arc shape is defined as D and a protrusion length of the protruding triangular shape of the slit region (52) is defined as d.

9. The pneumatic tire (10) according to any one of claims 1 to 8, wherein
a ratio W/D is 0.05 to 0.40, where a width at a protrusion base portion where the slit region (52) protrudes outwardly from a portion of the circular arc shape of the fixing region (50) to the outside of the circular arc shape is defined as W.

## Patentansprüche

1. Luftreifen (10) mit:
einem Reifenlaufflächenabschnitt, der mehrere Löcher (46) zum Einbetten von Stehbolzen (48) in eine
Laufflächenaußenfläche des Luftreifens (10) aufweist; und
mehreren Stehbolzen (48), die in die Löcher (46) eingelassen sind;
wobei die Laufflächenaußenfläche des Luftreifens (10), in den die Löcher (46) eingelassen sind, aus einer Laufflächengummikomponente (18) besteht und als ein Laufflächenmuster (30) ausgebildet ist,
wobei jedes der Löcher (46) einen Befestigungsbereich (50) und einen Schlitzbereich (52) aufweist, wenn eine Kontur von jedem der Löcher (46) von einer Außenseite der Laufflächenaußenfläche betrachtet wird,
wobei der Befestigungsbereich (50) an einen Umfang von jedem der Stehbolzen (48) zum Befestigen der Stehbolzen (48) anliegt,
wobei der Schlitzbereich (52) vom Umfang von jedem der Stehbolzen (48) beabstandet und so ausgebildet ist, dass er sich vom Befestigungsbereich (50) so erstreckt, dass ein Abschnitt des Reifenlaufflächenabschnitts ausgeschnitten ist,
**dadurch gekennzeichnet, dass**
eine Kontur des Schlitzbereichs (52) von der Außenseite der Laufflächenaußenfläche betrachtet eine Form aufweist, in der zwei gerade Linien, die von einer Kreisbogenform des Befestigungsbereichs (50) vorstehen, an vorstehenden Vorderenden verbunden sind, so dass die Kontur des Schlitzbereichs (52) nach außen in einer dreieckigen Form von einem Abschnitt der Kreisbogenform zu einer Außenseite der Kreisbogenform vorsteht.

2. Luftreifen (10) nach Anspruch 1, wobei jedes der Löcher (46) zwei Befestigungsbereiche (50) und zwei Schlitzbereiche (52) aufweist, wenn die Kontur von jedem der Löcher (46) von der Außenseite der Laufflächenaußenfläche betrachtet wird,
wobei die zwei Befestigungsbereiche (50) an einen Umfang von jedem der Stehbolzen (48) zum Befestigen der Stehbolzen (48) anliegen,
wobei die zwei Schlitzbereiche (52) vom Umfang von jedem der Stehbolzen (48) beabstandet und so ausgebildet sind, dass sie sich vom Befestigungsbereich (50) so erstrecken, dass ein Abschnitt des Reifenlaufflächenabschnitts ausgeschnitten ist, und wobei, wenn die Löcher (46) von der Außenseite der Laufflächenaußenfläche betrachtet werden, die zwei Schlitzbereiche (52) an Positionen vorgesehen sind, die auf gegenüberliegenden Seiten zwischen den zwei Befestigungsbereichen (50) einander gegenüberliegen.

3. Luftreifen (10) nach einem der Ansprüche 1 bis 2, wobei der Schlitzbereich (52), der sich vom Befestigungsbereich (50) erstreckt, eine Richtungskomponente aufweist, die sich mindestens in die Reifenbreitenrichtung erstreckt.

4. Luftreifen (10) nach einem der Ansprüche 1 bis 3, wobei eine Ausdehnungsrichtung des Schlitzbereichs (52) bezüglich der Reifenbreitenrichtung um 0 bis 45 Grad geneigt ist.

5. Luftreifen (10) nach einem der Ansprüche 1 bis 4, wobei der Schlitzbereich (52) in einem Außenflächenabschnitt vorgesehen ist, der die Laufflächenaußenfläche in eine Tiefenrichtung des Lochs (46) aufweist.

6. Luftreifen (10) nach einem der Ansprüche 1 bis 5, wobei eine Tiefe des Schlitzbereichs (52), in der sich der Schlitzbereich (52) in die Tiefenrichtung des Lochs erstreckt, 0,5 bis 2,0 mm beträgt.

7. Luftreifen (10) nach einem der Ansprüche 1 bis 6, wobei, wenn die Kontur von jedem der Löcher (46) von der Außenseite der Laufflächenaußenfläche betrachtet wird, die Schlitzbereiche (52) eine Form aufweisen, die nach außen von einem Abschnitt der Kreisbogenform zur Außenseite der Kreisbogenform vorsteht.

8. Luftreifen (10) nach einem der Ansprüche 1 bis 7, wobei ein Verhältnis d/D 0,05 bis 0,40 beträgt, wobei ein Durchmesser der Kreisbogenform als D definiert ist und eine Vorsprungslänge der vorstehenden Dreiecksform des Schlitzbereichs (52) als d definiert ist.

9. Luftreifen (10) nach einem der Ansprüche 1 bis 8, wobei ein Verhältnis W/D 0,05 bis 0,40 beträgt, wobei eine Breite an einem Vorsprungsbasisabschnitt, wo der Schlitzbereich (52) nach außen von einem Abschnitt der Kreisbogenform des Befestigungsbereichs (50) zur Außenseite der Kreisbogenform vorsteht, als W definiert ist.

## Revendications

1. Pneumatique (10), comprenant :
une bande de roulement présentant une pluralité de trous (46) de logement de crampons (48) dans une surface de roulement extérieure du pneumatique (10) ; et
une pluralité de crampons (48) logés dans les trous (46) ;
la surface de roulement extérieure du pneumatique (10) où sont intégrés les trous (46) étant constituée d'un composant caoutchouc (18) de bande de roulement et étant formée comme sculpture (30) de roulement,
chaque trou (46) comprenant une zone de fixation (50) et une zone en fente (52), le contour de chaque trou (46) étant vu de l'extérieur de la surface de roulement extérieure,
la zone de fixation (50) étant adjacente à la circonférence de chaque crampon (48) pour fixer les crampons (48),
la zone en fente (52) étant espacée de la circonférence de chaque crampon (48) et étant formée de manière à s'étendre depuis la zone de fixation (50) pour découper une partie de la bande de roulement,
**caractérisé**
**en ce que** le contour de la zone en fente (52), vu de l'extérieur de la surface de roulement extérieure, a une forme où deux lignes droites s'étendant depuis un arc de cercle de la zone de fixation (50) se rejoignent à des extrémités avant saillantes, de sorte que le contour de la zone en fente (52) s'étend avec une forme triangulaire depuis une partie de l'arc de cercle vers l'extérieur de l'arc de cercle.

2. Pneumatique (10) selon la revendication 1, où chaque trou (46) comprend deux zones de fixation (50) et deux zones en fente (52), le contour de chaque trou (46) étant vu de l'extérieur de la surface de roulement extérieure,
les deux zones de fixation (50) étant adjacentes à la circonférence de chaque crampon (48) pour fixer les crampons (48),
les deux zones en fente (52) étant espacées de la circonférence de chaque crampon (48) et étant formées de manière à s'étendre depuis la zone de fixation (50) pour découper une partie de la bande de roulement, et où, les trous (46) étant vus de l'extérieur de la surface de roulement extérieure, les deux zones en fente (52) sont prévues à des emplacements en vis-à-vis sur des côtés opposés entre les deux zones de fixation (50).

3. Pneumatique (10) selon la revendication 1 ou la revendication 2, où
la zone en fente (52) s'étendant depuis la zone de fixation (50) présente une composante directionnelle s'étendant au moins dans le sens de la largeur du pneumatique.

4. Pneumatique (10) selon l'une des revendications 1 à 3, où la direction d'extension de la zone en fente (52) est inclinée de 0 à 45° par rapport au sens de la largeur du pneumatique.

5. Pneumatique (10) selon l'une des revendications 1 à 4, où la zone en fente (52) est prévue dans une partie de surface extérieure incluant la surface de roulement extérieure dans le sens de la profondeur du trou (46).

6. Pneumatique (10) selon l'une des revendications 1 à 5, où la profondeur de la zone en fente (52) où la zone en fente (52) s'étend dans le sens de la profondeur du trou est comprise entre 0,5 et 2,0 mm.

7. Pneumatique (10) selon l'une des revendications 1 à 6, où le contour de chaque trou (46) étant vu de l'extérieur de la surface de roulement extérieure, les zones en fente (52) ont une forme s'étendant depuis une partie de l'arc de cercle vers l'extérieur de l'arc de cercle.

8. Pneumatique (10) selon l'une des revendications 1 à 7, où le rapport d/D est compris entre 0,05 et 0,40, le diamètre de l'arc de cercle étant défini en tant que D et la longueur d'extension de la forme triangulaire saillante de la zone en fente (52) étant définie en tant que d.

9. Pneumatique (10) selon l'une des revendications 1 à 8, où le rapport W/D est compris entre 0,05 et 0,40, la largeur sur une partie de base d'extension où la zone en fente (52) s'étend depuis une partie de l'arc de cercle de la zone de fixation (50) vers l'extérieur de l'arc de cercle étant définie en tant que W.
